# EUROPÄISCHE PATENTANMELDUNG

(11) **EP 1 686 477 A1**
(43) Veröffentlichungstag der Anmeldung: **02.08.2006**
(21) Anmeldenummer: 05001907.4
(22) Anmeldetag: 31.01.2005
(51) Int. Cl.: G06F 11/16

(54) **Verfahren zum unterbrechungsfreien Software-Update**

(71) Anmelder: Siemens Schweiz AG, 8047 Zürich (CH)
(72) Erfinder: Kuhn, Markus, 8038 Zürich (CH)
(74) Vertreter: Fischer, Michael

(57) **Zusammenfassung**

Der Erfindung liegt die Aufgabe zugrunde, ein Verfahren zum Update einer auf einer Netzwerkzelle ausgeführten Zellen-Software anzugeben, die den Übergang von einer operativ aktiven Version der Zellen-Software zur nächsten Version prozessmässig erleichtert und kostenmässig vorteilhaft ist.

Diese Aufgabe wird erfindungsgemäss durch ein Verfahren gelöst, bei dem zum unterbrechungsfreien Software-Update für eine Netzwerkzelle, insbesondere eine Leittechnikzelle, eines in eine Anzahl von Bereichen unterteilten Netzwerks, insbesondere eines in regionale Bereiche unterteilten Leitsystems für ein Eisenbahnnetzwerk die folgenden Schritte umfasst sind:
a) auf der Netzwerkzelle (NWZ) mindestens zwei Zellenmoleküle (aZM, pZM) ausgestaltet sind, auf denen eine dieser Netzwerkzelle (NWZ) zugeordnete bereichsspezifische Zellen-Software ausführbar ist, wobei im Normalbetrieb eines dieser mindestens zwei Zellenmoleküle (aZM) die Zellen-Software operativ aktiv ausführt,
b) bei Vorhandensein eines Software-Updates für die Zellen-Software das Update auf dem nicht-operativen Zellenmolekül (pZM) installiert und ausgeführt wird,
c) das Update der Zellen-Software an einem dem Zellenmolekül temporär zum Testzweck zuordenbaren Arbeitsplatz (P) geprüft wird, und
d) nach Bestehen des Tests auf das Zellenmolekül (pZM) mit der upgedateten Zellensoftware umgeschaltet und die upgedatete Zellensoftware nun auf diesem Zellenmolekül (pZM) operativ aktiv für die Netzwerkzelle (NWZ) ausgeführt wird.

## Beschreibung

Die vorliegende Erfindung betrifft ein Verfahren zum unterbrechungsfreien Software-Update für eine Netzwerkzelle, insbesondere eine Leittechnikzelle, eines in eine Anzahl von Bereichen unterteilten Verkehrsnetzwerks, insbesondere eines in regional wirksame Leittechnikzellen unterteilten Leitsystems für ein Eisenbahnnetzwerk.

Eisenbahnnetzwerke unterliegen heute immer noch der nationalen Hohheit des Staates, auf dem dieses Eisenbahnnetzwerk liegt. Zur Lenkung des Zugverkehrs auf einem derartigen nationalen Eisenbahnnetzwerk sind verschiedene regional wirksame Leittechnikzentren - nachfolgend allgemeiner als Netzwerkzellen bezeichnet - vorgesehen. Diese Netzwerkzellen steuern daher den Zugverkehr auf den ihnen jeweils zugewiesenen geographischen Bereichen. In der Regel ist es im heutigen Zustand einer derartigen dispositiven Zuglenkung noch so, dass sich ein Datenaustausch zwischen den einzelnen Netzwerkzellen auf den Austausch von Zugnummern an den Grenzen zwischen zwischen zwei benachbarten Netzwerkzellen beschränkt. Ebenso ist es heute noch vielfach der Fall, dass die einzelnen auf den Netzwerkzellen laufenden Systeme proprietär sind und sich daher die jeweilige Betriebssoftware von Netzwerkzelle zu Netzwerkzelle unterscheiden kann.

Innerhalb einer Netzwerkzelle werden mittels der Zellen-Software, also der auf dem Rechnernetzwerk der Zelle ausgeführten Leittechnik-Programm, die Züge gesteuert, indem Fahrstrassen gestellt und die Zugläufe auseinander abgestimmt und optimiert werden. Beim Vorliegen eines Updates für die Zellen-Software können beispielsweise Änderungen im eisenbahntechnischen Reglement und/oder in den Konfigurationsdaten, zum Beispiels aufgrund von Änderungen der Gleistopologie, in der Netzwerkzelle implementiert und in den operativ aktiven Betrieb übernommen werden.

Hierzu ist es momentan erforderlich, das Software-Update in den Randzeiten, also meistens in der Nacht zwischen 1 und 5 Uhr, zu installieren und zu testen. Hierbei kommt es aufgrund der erforderlichen Ladevorgänge und der nachfolgend notwendigen Systemneustarts zu zeitlich und betrieblich erheblichen Unterbrüchen, so dass die bestimmungsgemässe Funktion dieser Netzwerkzelle während dieser Zeit manuell aufrechterhalten werden muss. Ausserdem tritt während dieser Zeit ein hohes Aufkommen von betriebsbedingten Fehlermeldungen auf, die ja aufgrund des bestehenden Funktionsunterbruchs der Netzwerkszelle allein schon aus sicherheitsrelevanten Überlegungen auftreten müssen. Dabei ist es mitunter besonders schwierig, unter diesen Fehlermeldungen solche Meldungen aufzuspüren, die nun eben nicht auf den von dem Update-Vorgang hervorgerufenen Unterbruch zurück zu führen sind, sondern tatsächlich verkehrs- und/oder sicherheitsrelevante Störmeldungen sind, wie beispielsweise eine sich ankündigende Überlastung eines von mehreren Zugverbänden anvisierten Fahrwegs. Weiter ist natürlich aufgrund der Tatsache, dass diese Arbeiten nur in den Randzeiten ausgeführt werden können, der Druck an die beteiligten Personen sehr hoch, dass das Update einerseits erfolgreich installiert und dann auch noch erfolgreich in Betrieb genommen werden kann. Diese Randbedingung setzt daher ein hohes vorgängig vorzunehmendes Testvolumen voraus, was sich wiederum für den Netzbetreiber in einem gewissen Kostenvolumen widerspiegelt.

Der vorliegenden Erfindung liegt daher die Aufgabe zugrunde, ein Verfahren zum Update einer auf einer Netzwerkzelle ausgeführten Zellen-Software anzugeben, die den Übergang von einer operativ aktiven Version der Zellen-Software zur nächsten Version prozessmässig erleichtert und kostenmässig vorteilhaft ist.

Diese Aufgabe wird erfindungsgemäss durch ein Verfahren gelöst, bei dem zum unterbrechungsfreien Software-Update für eine Netzwerkzelle, insbesondere eine Leittechnikzelle, eines in eine Anzahl von Bereichen unterteilten Verkehrsnetzwerks, insbesondere eines in regionale Bereiche unterteilten Leitsystems für ein Eisenbahnnetzwerk die folgenden Schritte umfasst sind:
a) auf der Netzwerkzelle werden mindestens zwei Zellenmoleküle ausgestaltet, auf denen eine dieser Netzwerkzelle zugeordnete bereichsspezifische Zellen-Software ausführbar ist, wobei im Normalbetrieb eines dieser mindestens zwei Zellenmoleküle die Zellen-Software operativ aktiv ausführt,
b) bei Vorhandensein eines Software-Updates für die Zellen-Software wird das Update auf dem nicht-operativen Zellenmolekül installiert und ausgeführt,
c) das Update der Zellen-Software wird an einem dem Zellenmolekül temporär zum Testzweck zuordenbaren Arbeitsplatz geprüft, und
d) nach Bestehen des Tests wird auf das Zellenmolekül mit der upgedateten Zellensoftware umgeschaltet und die upgedatete Zellensoftware wird auf diesem Zellenmolekül operativ aktiv für die Netzwerkzelle ausgeführt.

Auf diese Weise ermöglicht es das Verfahren, dass die bestimmungsgemässe Aufgabe der Netzwerkzelle während eines Update der Zellensoftware überhaupt nicht oder ggfs. wirklich nur sehr kurzfristig unterbrochen werden muss, weil es mit dem Start des zweiten Zellenmolekül möglich ist, die operativ aktive Version der Zellen-Software weiterhin auszuführen und das Update der Zellen-Software parallel dazu zu starten und in einem nicht-operativ aktiven Zustand arbeiten zu lassen, was es wiederum ermöglicht, die Funktion dieses Updates mit den "scharfen" Daten und unter "quasi-scharfen" Bedindungen auszuführen und zu testen. Unter dem Begriff des Zellenmoleküls wird dabei eine logische in sich funktional abgeschlossene Instanz verstanden, auf der die Zellen-Software, oder mit anderen Worten etwas allgemeiner gesprochen, die Zellen-Logik aufgeführt wird.

In einer vorteilhaften Weiterbildung der Erfindung kann es vorgesehen sein, dass das operativ aktive Zellenmolekül prozessrelevante Daten von Umsystemen erhält und/oder an Umsysteme ausgibt, wobei das nicht-operative Zellenmolekül, auf welchem das Software-Update installiert und ausgeführt wird, diesselben und/oder die zu seinem Betrieb spezifisch erforderlichen prozessrelevanten Daten erhält und eigene mit der upgedateten Zellen-Software ermittelte Daten an die Umsysteme abgibt. Auf diese Weise können die notwendigen Testergebnisse gewonnen, die u.a. einerseits darauf abstellen, festzustellen, ob das Angebot der von den Umsystemen abgesetzten Daten mit der Nachfrage der Software nach Daten von den Umsystemen übereinstimmt und die andererseits natürlich überprüfen müssen, ob die richtigen Daten an die Umsysteme abgegeben werden. Dabei kann die Abgabe der Daten an die Umsysteme virtuell ausgestaltet sind, damit es an der Schnittstelle zwischen Netzwerkzelle und Umsysteme nicht zu Zuständen, wie Data mismatch oder Deadlock, kommt .

Um im besonderen diesen generellen Datenaustausch zwischen den Umsystemen und den Zellenmoleküle möglichst einfach auszugestalten, können das operativ aktive Zellenmolekül und das nicht-operativ aktive Zellenmolekül auf Konfigurations-und/oder Prozessdaten zugreifen und/oder Protokolleinträge in einer Datenbank vornehmen, wobei die Zellensoftware sowie das Software-Update für die Zellensoftware so ausgestaltet sind, dass das Zugreifen auf die Konfigurations- und/oder Prozessdaten und/oder die Vornahme der Protokolleinträge releaseunabhängig sind. Damit ist indirekt gesagt, dass eine Protokollstruktur geschaffen wird, die derartige Wechsel der Zellen-Software nicht beeinflussen.

Um den Datenaustausch eben einerseits releaseunabhängig zu gestalten, aber dennoch eine hohe Flexibilität in der Zuordnung von Daten erhalten zu können, kann in weiterer Ausgestaltung der Erfindung zwischen den mindestens zwei Zellenmolekülen und den Umsystemen mindestens ein Schnittstellenmolekül eingefügt werden, welches hinsichtlich einer Datenzuordnung von den Umsystemen an die Zellenmoleküle und/oder von den Zellenmolekülen an die Umsysteme konfiguriert wird und so die Daten zwischen den Zellenmolekülen und den Umsystemen gemäss der Konfiguration verteilt. Auf diese Weise wird eine logisch in sich selbst abgeschlossene Klasse von sogenannten Schnittstellenaufgaben geschaffen, die mit der vorstehend eingefügten Begriff des Moleküls umschrieben werden kann. Dieses Schnittstellenmolekül stellt daher für die Umsysteme eine Situation her, dass diese ihre externen Protokoll wie gehabt aufrechterhält und erst intern entsprechend der vorgegebenen Konfiguration die Informationen an das jeweilige Zellenmolekül verteilt.

In einer weiteren Ausgestaltung dieses Merkmals kann es dann darüber hinausgehend vorgesehen sein, dass das Schnittstellenmolekül während des parallelen Betriebs von dem operativ aktiven Zellenmolekül und dem nicht-operativ aktiven zellenmolekül, welches mit der upgedateten Zellen-Software betrieben wird, in einer Weise konfiguriert wird, dass auch von dem nicht-operativ aktiven Zellenmolekül Daten an Umsysteme ausgegeben werden. Damit erlaubt das Schnittstellenmolekül auch Ausgaben an Umsysteme, die die Datenausgaben des operativ-aktiven Zellenmoleküls bedarfsgerecht ersetzten oder ergänzen.

Bei der Aufnahme des parallelen Betriebs von dem operativ-aktiven Zellenmolekül mit der "alten" Zellen-Software und dem nicht-operativ aktiven Zellenmolekül mit der "neuen" Zellen-Software ist es häufig schon aus Synchronosationgründen erforderlich, dass die beiden zellenmoleküle auf derselben Zeitbasis betrieben werden. Es ist daher auch hinsichtlich der Datenversorgung vorteilhaft, wenn zu dem Zeitpunkt, zu dem ein mit dem Software-Update aufgerüstetes Zellenmolekül gestartet wird, ein komplettes Abbild der von dem operativ aktiven Zellenmolekül genutzten Daten an das dann nicht-operativ aktive Zellenmolekül transferiert wird.

Eine weiterer wichtige Weiterbildung der Erfindung beschäftigt sich mit der Bereitstellung der notwendigen Flexibilität bezüglich des Aufgabenumfanges von alter und neuer Zellen-Software, weil beispielsweise Änderungen in der Gleis- und/oder Signal- und/oder Zugbeeinflussungs-Topologie ein temporäres Zusammenwirken von alter und neuer Zellen-Software für den Zeitraum erforderlich macht, in welchem das mit der bisherigen Zellen-Software arbeitende zellenmolekül operativ aktiv ist. Zur Bereitstellung dieser Flexibilität ist es vorgesehen, dass während des Betriebs des nicht-operativ aktiven Zellenmoleküls Bearbeitungsausnahmen konfiguriert und aktiv geschaltet werden können, so dass von den Bearbeitungsausnahmen betroffene Funktionen im operativ aktiven Zellenmolekül in den nicht-operativ aktiven Zustand wechseln. In vorteilhafter Weiterbildung dieses Merkmals können dann mit dem Umschalten auf das mit dem Software-Update ausgerüstete Zellenmolekül, das damit operativ aktiv für die Netzwerkzelle arbeitet, sämtliche zuvor konfigurierte Bearbeitungsausnahmen aufgehoben werden.

Um den Übergang von der bisherigen Zellen-Software auf die mit dem Update arbeitende Zellen-Software auch innerhalb der Netzwerkzelle gut organisiert und strukturiert ablaufen lassen zu können, kann dem Netzwerk eine Anzahl von Bedienerarbeitsplätzen zugeordnet werden, die jeweils individuell mit nur einem der mindestens zwei Zellenmoleküle zusammen arbeiten. Somit kann für jeden Arbeitsplatz separat bestimmt, welches und ab wann ein bestimmtes Zellenmolekül für diesen Arbeitsplatz verbindlich ist.

Um im besonderen auch die parallele Ausführung von alter und neuer Zellen-Software auf den beiden Zellenmolekülen in einer Weise besser unterstützen zu können und zum Beispiel ggfs. auch fehlerhafte Manipulation eines Zellenadministrator wieder behoben werden können, ist es besonders zweckmässig, wenn unterschiedliche Stände von globalen Konfigurationsdaten gehalten werden, wobei jeder Version der Zellen-Software ein Stand der globalen Konfigurationsdaten zugeordnet wird. Dabei können mit der Installation eines Software-Updates die Konfigurationsdaten angepasst werden, wobei diese Anpassung in einem neuen Stand der globalen Konfigurationsdaten mündet. Somit besteht eine klare Zuordnung über die Zugehörigkeit von Sätzen oder Ständen von Konfigurationsdaten zu den entsprechenden Versionen der Zellen-Software.

Aus Redundanzgründen oder auch aus Gründen, dass bestimmte Funktionen der upgedateten Zellen-Software möglicherweise erst im scharfen Betrieb und dann auch erst nach einer gewissen Zeitspanne erstmalig auftreten und somit vormals nicht in allen Einzelheiten für den scharfen Betrieb getestet werden konnten, ist für die Gewährung der Funktionssicherheit und der Verfügbarkeit der Netzwerkzelle besonders vorteilhaft, wenn nach dem Umschalten auf das mit dem Update der Zellen-Software ausgerüstete Zellenmolekül das vormals operativ aktive Zellenmolekül die auf ihm laufende nicht-geupdatete Zellen-Software weiterhin in dem nicht-operativ aktiven Zustand ausführt. Derartige nicht testbare Zustände können zum Beispiel auch dadurch auftreten, dass zum Beispiel die Fahrdienstleiter versehentlich Eingaben vornehmen, die per se ausgeschlossen waren und in unglücklicher Konstellation aber Oszillationszustände des Leitsystems herbeiführen können oder sich sonst wie nachteilig auf den Betrieb der upgedateten Zellen-Software auswirken und ein Rücksprung auf die "alte" Zellen-Software die Systemverfügbarkeit garantiert oder sogar wiederherstellt.

Weitere vorteilhafte Ausgestaltungen der Erfindung können den übrigen Unteransprüchen entnommen werden.

Auführungsbeispiele der Erfindung werden nachfolgend anhand der Zeichnung näher erläutert. Dabei zeigen:
- Figur 1: eine schematische Ansicht der Architektur eines Leitsystems für ein Eisenbahnnetz; und
- Figur 2: eine detaillierte schematische Ansicht der Architektur des Leitsystems für ein Eisenbahnnetz gemäss Figur 1.

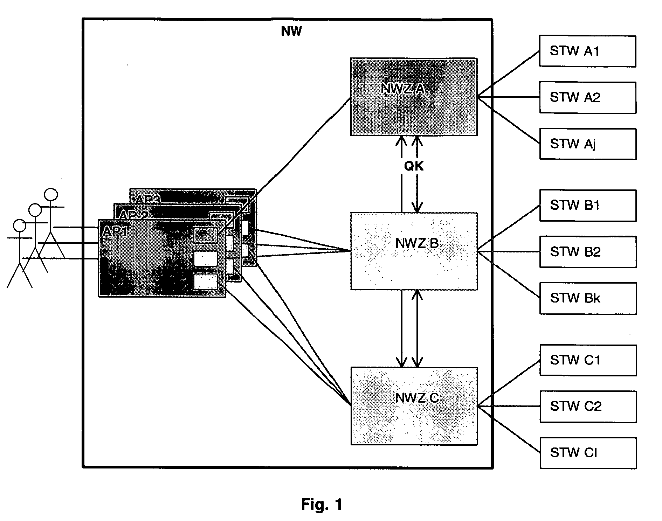

Figur 1 zeigt einer schematische Ansicht der Architektur eines Leitsystems, nachfolgend als Netzwerk NW bezeichnet, für ein Eisenbahnnetz. So ist heute beispielsweise das Bahnnetz der schweizerischen Bundesbahnen (SBB) auf etwa 15 isolierte Leitsysteme aufgeteilt. Bei der Aufteilung handelt es sich um eine geografische Aufteilung, bei welcher jedes System für ein bestimmtes Gebiet zuständig ist. Die Kommunikation zwischen diesen Systemen beschränkt sich auf den Austausch von Zugnummern an den Grenzen zwischen den Systemen.

Im Netzwerk NW gemäss der vorliegenden Erfindung kann ein Netzwerkarbeitsplatz AP1 bis AP3 mit mehreren Netzwerkzellen NWZ kommunizieren, welche jeweils für ein geografisches Gebiet zuständig sind. Daraus ergeben sich gegenüber der Vielzahl der früheren für sich alleinstehenden Leitsysteme die folgenden neuen Architekturelemente:

| Begriff | Definition |
|---|---|
| NWZ | Eine eigenständige Netzwerkzelle NWZ, welche für ein geografisches Gebiet zuständig ist. |
| AP1 bis APn | Ein Arbeitsplatz im Netzwerk NW, von welchem beliebige NWZ bedient werden können. |
| NW-System | Die Gesamtheit aller NWZ und AP1 bis APn, welche zusammen ein Gesamtsystem bilden. |

Der Arbeitsplatz AP1 bis Apn fasst die Informationen konfigurationsgemäss aus den einzelnen Netzwerkzellen NWZ zusammen und erzeugt für den Benutzer eine Gesamtsicht. Die Netzwerkzellen NWZ werden für den Benutzer zu einem einzigen grossen System des Netzwerks NW. Dabei ist das System für den Benutzer transparent, so dass sich das aus mehreren kleineren Teilsystemen zusammengesetzte Gesamtsystem genauso verhält, wie ein einziges grosses Leitsystem über das gesamte Bahnnetz.

Die Elemente des Systems erfüllen die folgenden Anforderungen, wodurch die folgenden Architekturziele wunschgemäss erfüllt werden können:

| Eigenschaften der Elemente des System | Architekturziel(e), welches damit erreicht werden |
|---|---|
| Autonome Netzwerkzellen NWZ: | Verfügbarkeit, da die laufenden Netzwerkzellen NWZ verfügbar bleiben. |
| Die NWZ sind autonome Systeme und funktionieren bei einem Ausfall anderer netzwerkzellen NWZ oder des Netzwerks NW weiter. Ein Benutzer kann die NWZ lokal bedienen. | |
| Die Arbeitsplätze AP1 bis AP3 sind tolerant gegen einen Ausfall einer oder mehrerer Netzwerkzellen NWZ. Falls eine oder mehrere Netzwerkzellen NWZ oder die Netzwerkverbindung zu einer oder mehreren Netzwerkzellen NWZ ausfällt, funktionieren die Arbeitsplätze AP1 bis AP3 mit den noch verfügbaren Netzwerkzellen NWZ weiter. | |
| Rückwirkungsfreie Netzwerkzellen NWZ: Ein Probelm in einer Netzwerkzelle NWZ beeinflusst die anderen Netzwerkzellen NWZ nicht. | Verfügbarkeit, weil ein Problem in einer Netzwerkzelle NWZ die anderen Netzwerkzellen NWZ möglichst nicht beeinflusst. |
| Netzwerkzellen NWZ mit verschieden Zellen-Software-Release: | Verfügbarkeit, da kürzerer und eingegrenzter Ausfall bei einem Update. |
| Die einzelnen Netzwerkzellen NWZ können mit unterschiedlichen Code- und Systemdatenreleases betrieben werden. Die Netzwerkzellen NWZ haben dabei aber mindestens den ersten Zellen-Software-Release installiert. | |
| Arbeitsplätze AP1 bis AP3 mit verschieden Release der Netzwerk-Softwaire: | Wartbarkeit und Migrationsfähigkeit, da nicht an einem Tag in dem gesamten Netzwerk NW die Hardware, Software oder Daten ersetzt werden muss. |
| Die einzelnen Arbeitsplätze können mit unterschiedlichen Releases der Netzwerk-Software betrieben werden. Die Arbeitsplätze müssen dabei aber mindestens den ersten Release der Netzwerk-Software installiert haben. | |
| Verschieden Betriebssystem bzw. Betriebssystemversionen: | |
| Die einzelnen Netzwerkzellen NWZ und die Arbeitsplätze AP1 bis AP3 des Netzwerks NW können mit unterschiedlicher Betriebssystemen und Betriebssystemversionen Betrieben werden. | |
| Lokale Konfiguration: | |
| Soweit wie betriebsbedingt möglich sind alle Konfigurationsdaten einer Netzwerkzelle NWZ zugeordnet. | |
| Jede Netzwerkzelle NWZ verwaltet nur die Information -Konfigurationsdaten und Laufzeitdaten) seines geografischen Gebietes. | Skalierbarkeit |
| Jeder Arbeitsplatz hat nur die Information (Konfigurationsdaten und Laufzeitdaten), welche für die Arbeit des Benutzers nötig sind. Dies sind die Informationen seines beschränkten geografischen Gebietes. Es ist daher ein ganz wesentliches Merkmal in der Architektur des Netzwerks NW, dass kein Element in dem Netzwerk NW alle Informationen selbst hat. | |
| Zugang zu allen Netzwerkzellen NWZ: Der Benutzer kann von seinem Arbeitsplatz aus mit jeder Netzwerkzelle NWZ innerhalb des Netzwerks NW arbeiten. | Flexible Zusammenstellung der Zuständigkeit |

In dem Netzwerk NW entsteht daher für den Benutzer der Eindruck, dass für das gesamte Eisenbahnnetz nur ein Netzwerk-Leitsystem besteht. Für einen Teil der Leitsystem-Funktionen kann dies über die Integration der Informationen auf dem Arbeitsplatz AP1 bis AP3 realisiert werden. Um für den anderen Teil der Leitsystem-Funktionen diese Anforderung zu realisieren, tauschen die Netzwerkzellen Informationen untereinander im Wege einer Querkommunikation QK aus. Beispiele dazu sind die Leitsystem-Aufgaben Zugnummerverwalter (ZV), Zuglenkung (ZL) und Überfüllverhinderung (UeV). Somit ermöglicht die Querkommunikation QK zwischen den Netzwerkzellen NWZ die zellenübergreifenden Funktionen.

In dem bisherigen Leitsystemen gemäss dem Stand der Technik ist eine klassische Drei-Schichten-Architektur vorgesehen.Im Business Layer BL sind Informationen in Business Objekten BO, wie zum Beispiel Weiche, Signal, Balise oder Zug, gespeichert. Die Verarbeitung in diesem Layer, die durch einen Business-Server BS ausgeführte Business-Logik, bereitet diese Informationen auf. Der Ursprung der Informationen ist der Infrastructure Layer IL, welcher primär die Schnittstelle S zum Bahnprozess darstellt. Der VL konvertiert die Business Objekte BO und ihre Zustände in eine benutzergerechte Darstellung wie zum Beispiel ein Lupenbild. Der VL umfasst die gesamte Benutzeroberfläche, die vorrangig an den Arbeitsplätzen AP1 bis AP3 zur optischen Anzeige für die Fahrdienstleiter Fd1, Fd2 und temporär auch für den Prüfer P gebracht wird. Natürlich zählen auch andere Peripheriegeräte, wie Drucker, Speichermedien und Multimedia-Geräte zu dieser Benutzeroberfläche.

Der heutige VL gemäss dem Stand der Technik umfasst die Presentations Logik wie auch die eigentliche View Logik. In dem neuen Netzwerk ist die Presentations Logik aber stark von den Leitsystem-Konfigurationsdaten der einzelnen Netzwerkzellen NWZ abhängig und verbleibt daher neu auch in der Netzwerkzelle NWZ. Da die Arbeitsplatz AP1 bis AP3 im neuen erfindungsgemässen Netzwerk NW aber genau diese Presentations Logik nicht mehr enthalten, handelt es sich bei diesen Arbeitsplätzen AP1 bis AP3 um einen sogenannten "Thin-Client". Die Software für das Netzwerk NW hat also eine "Thin-Client" Struktur, d.h. die Presentation, welche die Business Objekte BO in eine Sicht für den Benutzer umwandelt, findet schon in der Netzwerkzelle NWZ statt. Der Presentation Layer PL bereitet die Informationen für den View Layer VL auf. Diese Aufbereitung ist abhängig von den im View Layer VL gewählten Parametern, wie z.B. Sprache, Informationsbereich, sowie von den Konfigurationsdaten der Netzwerkzelle NWZ.

Der Aggregation Layer AL fügt mittels eines Aggregators AG die Informationen aus den einzelnen Netzwerkzellen NWZ zu einem Ganzen zusammen und gibt diese an den View Client VC im View Layer VL, der nun nicht mehr innerhalb einer Netzwerkzelle NWZ ist, sondern die Arbeitsplätze AP1 bis AP3 bedient. Die Informationen von dem View Client VC an die Netzwerkzelle NWZ, die von den Arbeitsplätzen AP1 bis AP3 bespielsweise durch die Fahrdienstleiter Fd1 und Fd2 sowie den Prüfers P abgesetzt werden, werden durch den Aggregator AG im Aggregation Layer AL aufgeteilt und an die entsprechenden Netzwerkzellen NWZ weitergeleitet.

Der Presentation Layer PL wandelt zum Beispiel den aktuellen Zustand von Stellwerkelementen (Weiche, Gleis usw) in eine geometrische Darstellung eines Lupenbildes um. Der Aggregation Layer AL fügt die einzelnen geometrischen Darstellungen aus den einzelnen Netzwerkzellen NWZ zu einer übergreifenden geometrischen Darstellung zusammen, welche vom View Layer VL dem Benutzer als Übersichtsbild dargestellt wird. Der View Layer VL benötigt für diese Aufgabe keine Konfigurationsdaten. Der Aggregation Layer AL besitzt lediglich die Information wie die einzelnen geometrischen Darstellungen zu einer übergreifenden geometrischen Darstellung zusammengefügt werden.

Da der grösste Teil der Konfigurationsdaten und möglichst viel der Logik in den Netzwerkzellen NWZ vorhanden sind, ist es einerseits einfacher ein releaseunabhängiges Protokoll zwischen den Netzwerkzellen NWZ und den Netzwerkarbeitspläten AP1 bis AP3 zu defieren und es können andererseits die Konfigurationsdaten klar einer Netzwerkzelle NWZ zugeordnet werden. Aus welchen Netzwerkzellen NWZ und auf welche Art die Informationen für die Anzeige kommen, wird durch den Aggregation Layer AL gegenüber dem View Layer VL vollständig gekapselt und lässt sich somit vereinheitlichen. Jegliche Kenntnis des View Layers VL über die hinter dem Aggregation Layer AL liegende Topologie der Netzwerkzellen NWZ und ihrer Server ist demzufolge für den View Layer VL nicht notwendig. Durch diese Architektur des Netzwerks NW sind daher für die Oberflächen des View Layers VL und des Presentation Layers PL strikt aufgetrennt. Die eigentliche Anzeige (View) wird so von der Anzeige-Logik (Presentation) getrennt. Der View-Client VC braucht keine Anzeige-Logik (Presentation) mehr und hat somit keine Abhängigkeiten auf die Konfigurationsdaten der verschiedenen Netzwerkzellen NWZ.

Die Anzeige-Logik (Presentation) wird von einem Anzeige-Server MXVS in der Netzwerkzelle NWZ realisiert. Der Anzeige-Server MXVS bereitet die Anzeige für den View Client VC komplett auf. Damit der View Client VC mit mehreren Servern kommunizieren kann, wird der Aggregator AG zwischen dem View Client VC und dem Anzeige-Server MXVS vorgesehen. Der View Client VC kommuniziert so nur über den Aggregator AG mit den entsprechenden Anzeige-Servern MXVS mehrerer Netzwerkzellen NWZ.

Innerhalb des Presentation Layers PL gibt es auch Fälle, in welchen nicht zwingend ein Anzeige-Server MXVS nötig ist, weshalb es neben dem Anzeige-Server MXVS auch noch das Konzept eines Access Points AP gibt. Der Anzeige-Server MXVS bereitet die Information bedarfsgerecht für einen View Client VC auf. Von einem Anzeige-Server MXVS existiert eine Instanz pro View Client VC und Netzwerkzelle NWZ. Der Server des View Clients VC ist stateful, d.h. sein Zustand ist abhängig vom Arbeitsplatz AP1 bis AP3, für welchen er die Daten aufbereitet. Der Anzeige-Server MXVS ist daher eine umgebaute Aufgabe der im Stand der Technik bekannten und eingangs erwähnten einzelnen Leittechniksysteme. Der Access Point AP bietet eine generelle Schnittstelle zum Netzwerk NW bezüglich einer Funktion, wie zum Beispiel Zugdaten und Zugnummmer. Im Vordergrund steht es, eine Schnittstelle zu definieren, welche von beliebigen Clients, die die entsprechenden Informationen benötigen, verwendet wird. Der Access Point AP ist daher im Kontext eines Client zu weiten Teilen stateless, d.h. sein Zustand ist von den mit ihm verbundenen Arbeitsplätzen AP1 bis AP3 unabhängig, und speichert pro Client primär, welche Informationen dieser wünscht. Der Access-Point AP kann so einen Teil der Anzeige-Logik (Presentation) übernehmen. Er bietet somit einen Zugang zu einem definierten Satz von Informationen, welche nicht spezifisch für einen Arbeitsplatz AP1 bis AP3 aufbereitet sind.

Der View Client VC, welcher den View Layer VL umfasst, existiert einmal pro Benutzersession. Der Anzeige-Server MXVS existiert einmal pro Benutzersession und Netzwerkzelle NWZ und bereitet die Information für den entsprechenden Benutzer auf. Der Aggregator AG existiert für jede Benutzersession einzeln, da für jeden View Client VC unterschiedliche Informationen zusammengesetzt werden müssen. Der Access Point AP existiert einmal pro Netzwerkzelle NWZ, und dabei in zwei redundanten Instanzen, um die Verfügbarkeit zu erhöhen.

Es ist nun ein besonderes Merkmal der Architektur des Netzwerks NW, dass ein Verfahren zum nahezu unterbrechungsfreien Update durchgeführt werden kann. Die folgenden Begriffe werden zur Erläuterung dieses Verfahrens verwendet:

| Begriff | Definition |
|---|---|
| Konfiguration des Netzwerks NW | Die Konfiguration des Netzwerks NW umfast: Software-Release der Netzwerk-Software Systemprojektierungsdaten Anlageprojektierungsdaten Betriebssystem (Windows oder OpenVMS) |

| Begriff | Definition |
|---|---|
| Molekül | Eine Instanz einer Netzwerkzelle NWZ, welche mit anderen Netzwerkzellen NWZ zusammenarbeitet. Alle Teile eines Moleküls haben eine identische Netzwerk-Konfiguration haben. |
| Zellenmolekül ZM | Ein Zellenmolekül, in welchem die Logik der Netzwerkzelle läuft. Ein Zellenmolekül ZM ist eine Instanz einer Netzwerkzelle NWZ. Für eine Netzwerkzelle können mehrere Zellenmoleküle ZM existieren (siehe Figur 2, pZM und aZm. |

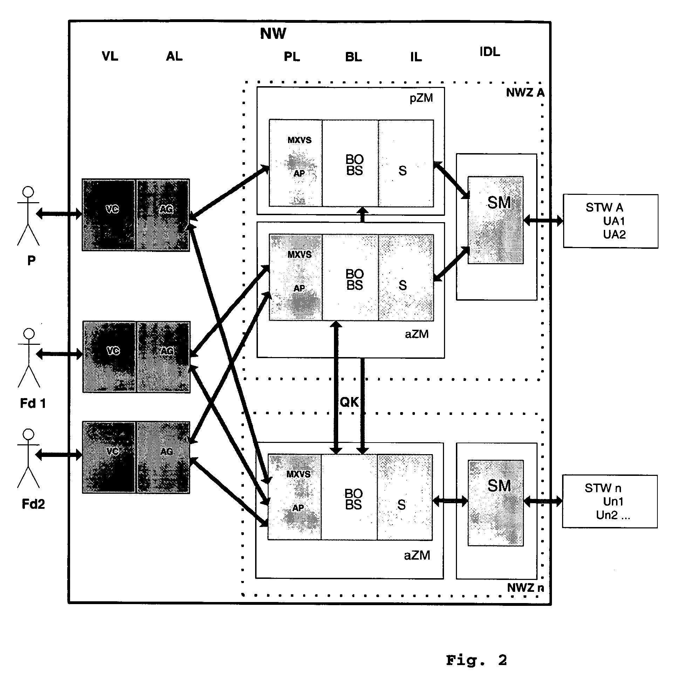

Der unterbruchsfreie Update wird erreicht, indem eine Netzwerkzelle NWZ, in Figur 2 speziell anhand der Netzwerkzelle NWZ A dargestellt, in zwei Instanzen zumindest temporär vorhanden ist. Dazu werden zwei Zellenmoleküle aZM und pZM für dieselbe Netzwerkzelle NWZ gestartet.

Ein Zellenmolekül kann in den folgenden zwei Zuständen betrieben werden:

| Zustand | Beschreibung |
|---|---|
| Operativ aktiv | Das Zellenmolekül aZM in diesem Zustand macht alle Ausgaben an die Umsysteme, wie z.B. Stellwerk STW, Aussenanlagen UA1, UA2 bis Un1, Un2, Radio Block Center usw. |

| Zustand | Beschreibung |
|---|---|
| Nicht-operative aktiv | Das Zellenmolekül pZM in diesem Zustand wird parallel zum operativ aktiven Zellenmolekül aZM betrieben. Das Zellenmolekül pZM, welches im nicht-operativ aktiven Zustand läuft, ist "hot standby", d.h. es macht die ganze Verarbeitung mit. Das nicht-operativ aktive Zellenmolekül pZM macht nur gewisse Ausgaben an die Umsysteme. Das nicht-operativ aktive Zellenmolekül pZM wird verwendet, um zum Beispiel eine neue Netzwerkzellen-Konfiguration für eine Netzwerkzelle NWZ oder ein Update der Zellen-Software zu testen. |

Für jeden Arbeitsplatz AP1 bis AP3 kann ausgewählt werden, zu welchem Zellenmolekül aZM, pZM dieser verbinden soll. Zu welchem Zellenmolekül aZM, pZM ein Arbeitsplatz AP1 bis AP3 verbindet, kann für jede Netzwerkzelle NWZ entweder anhand des dynamischen Zustands "operativ aktiv" oder "nicht-operativ aktiv" oder anhand einer statischen Bezeichnung des Zellenmoleküls ZM spezifiziert werden.

Der Ablauf eines unterbruchsfreien Updates besteht aus den folgenden Phasen:
Phase 1: Bisherige Konfiguration in Betrieb
   Dies ist der Zustand vor dem unterbruchsfreien Update. Die bisherige Konfiguration ist in der Netzwerkzelle NW geladen und alle Benutzer arbeiten mit dieser Konfiguration. Das Zellenmolekül mit der bisherigen Konfiguration ist operativ aktiv, das andere Zellenmolekül ist nicht in Betrieb.
Phase 2: Parallelbetrieb mit der bisheriger Konfiguration als Standard
   In dieser Phase läuft das Zellenmolekül pZM mit der neuen Konfiguration parallel zum Zellenmolekül aZM mit der bisherigen Konfiguration. Ausgewählte Arbeitsplätze, beispielsweise der Arbeitsplatz für den Prüfer P, werden auf das Zellenmolekül pZM mit der neuen Konfiguration umgeschaltet. An diesen Arbeitsplätzen wird die neue Konfiguration geprüft. Das Zellenmolekül aZM mit der bisherigen Konfiguration ist operativ aktiv, das andere Zellenmolekül pZM macht die gesamte Verarbeitung nun mit, ist aber nicht-operativ aktiv.
Phase 3: Neue Konfiguration wird aktiv geschaltet
   Im laufenden Betrieb wird das nicht-operativ aktive Zellenmolekül pZM mit der neuen Konfiguration operativ aktiv geschaltet, wobei gleichzeitig das bisher operativ-aktive Zellenmolekül aZM mit der bisherigen Konfiguration in den nicht-operativ aktiven Zustand wechselt. Die meisten Arbeitsplätze AP1 bis AP3 verbinden automatisch zum Zellenmolekül mit dem dynamischen Zustand "operativ aktiv", d.h. diese schalten sich in dieser Phase automatisch von dem Zellenmolekül aZM mit der bisherigen Konfiguration auf das Zellenmolekül pZM mit der neuen Konfiguration um.
Phase 4: Parallelbetrieb mit der neuen Konfiguration als Standard
   In dieser Phase arbeiten die Benutzer, d.h. vor allen Dingen die Fahrdienstleiter FD1 und FD2, mit der neuen Konfiguration, d.h. mit der upgedateten Zellen-Software. Das Zellenmolekül mit der bisherigen Konfiguration läuft nicht-operativ aktiv parallel mit, damit, falls mit der neuen Konfiguration Probleme auftreten, auf diese bisherige Konfiguration zurückgeschaltet werden kann.
Phase 5: Neue Konfiguration in Betrieb
   In dieser letzten Phase wird das Zellenmoleküle aZM mit der bisherigen Konfiguration, das bisher noch nicht-operativ aktiv die gesamte Verarbeitung mitgemacht hat, abgeschaltet. Es läuft dann nur noch das Zellenmolekül pZM mit upgedateten Konfiguration in operativ-aktivem Zustand. Ausser für die Benutzer, welche in der Phase 2 die neue Konfiguration testen, beschränkt sich für die restlichen Benutzer der unterbruchsfreie Update auf die Phase 3, in welcher der Arbeitsplatz von der bisherigen Konfiguration auf die neue Konfiguration umschaltet. Für den Benutzer wirkt sich dieser Umschaltvorgang aus, wie wenn die Verbindung zur Netzwerkzelle NWZ kurzfristig verloren geht und wieder hergestellt wird. Dabei gehen Bedienungen in genau diesem kurzen Zeitraum, welche gerade ausgeführt werden, verloren und gewisse Dialogboxen werden geschlossen. Damit der Benutzer bei der Erledigung seiner Aufgabe möglichst nicht beeinträchtigt wird, werden die Benutzer vor dem Umschalten der zellenmoleküle über die Inbetriebsetzung der neuen Konfiguration informiert, z.B. mit einer entsprechenden Notiz in den entsprechenden Zonen. Der Unterbruch liegt typischerweise deutlich unter einer Minute. Demgegenüber konnten beim bisherigen Update-Vorgang gemäss dem Stand der Technik die Anzeige- und Bedienungen (Lupen- und Übersichtsbilder) nicht parallel betrieben werden. Für die Umschaltung dieser muss das Leitsystem auf den entsprechenden Rechnern neu gestartet werden, was etwa 10 Minuten Unterbruch bedingte. Der ganze Update-Vorgang dauerte in der Regel mehr als eine Stunde, wobei es während diesem Vorgang zu zahlreichen Störmeldungen kommt.

Mit dem erfindungsgemässen unterbruchsfreien Update können nun zwei Netzwerk-Konfigurationen, d.h. zwei unterschiedliche Versionen der Zellen-Software mit all ihren jeweilig zugehörigen (Konfigurations)-Daten während einigen Tagen parallel betrieben werden (Phase 2).

Viele der Informationen, welche die Netzwerkzelle NWZ aufbereitet, werden von anderen Systemen (STW, Aussenanlagen UA1 bis Un2)) bezogen. Wenn die Netzwerkzelle NWZ gestartet wird, werden diese Informationen von diesen externen Systemen über eine Generalabfrage bezogen werden. Es gibt aber auch Informationen, welche nur in der Netzwerkzelle NWZ gespeichert sind und welche nicht von einem externen System bezogen werden können. Diese Informationen müssen auch nach einem Neustart von der Netzwerkzelle NWZ oder einzelnen Aufgaben noch vorhanden sein. Darum sind diese Informationen oft persistent (in Datenbank, Files) gespeichert und/oder werden zwischen Haupt-, Spiegel- und Passiv-Laufzuständen der Aufgaben abgeglichen. Wenn ein Zellenmolekül im nicht-operativ aktiven Zustand gestartet wird, werden die von der Netzwerkzelle NWZ verwalteten Daten vom operativ aktiven Zellenmolekül aZM bezogen. Die Schnittstelle, mit welcher die von der Netzwerkzelle verwalteten Daten (d.h. auch globale Daten, auf die die Netzwerkzelle zugreift, die aber nicht in ihrer Instanz gespeichert sind) zwischen den Zellenmolekülen abgeglichen werden, ist releaseunabhängig ausgestaltet.

Während der Zeit, in der mehrere Zellemoleküle aZM, pZM laufen, müssen diese Daten synchron gehalten werden. Im Falle des Printermanangements werden die Daten zusammengeführt, damit am Schluss alle Protokolleinträge beider Zellenmoleküle aZM, pZM vorhanden sind. Bei den Protokolleinträgen ist ersichtlich, aus welchem der Zellenmolekül aZM und pZM diese stammen.

Zur Anpassung der Schnittstellen ist nun anzumerken, dass viele der externen Schnittstellen so ausgelegt sind, dass das externe System mit genau einer Netzwerkzelle kommuniziert. Wenn nun in einer Netzwerkzelle NWZ mehrere Zellenmoleküle aZM, pZM laufen, müssen aber trotzdem alle Zellenmoleküle mit diesem externen System kommunizieren können. Dazu ist eine Schnittstellenaufgabe geschaffen worden, welche in einem eigenen Schnittstellen-Molekül SM läuft. Diese Schnittstellenaufgaben sind im Schnittstellen-Molekül konfigurierbar und setzen das externe Protokoll gemäss der gewählten Konfiguration in ein internes Protokoll um und verteilen die Informationen an die einzelnen Zellenmoleküle aZM, pZM. Diese Schnittstellenaufgaben werden als eigener Layer, den Interface Dispatcher Layer IDL, betrieben. Der Interface Dispatcher Layer selbst kommt nahezu ohne Konfigurationsdaten aus. Die Schnittstelle zwischen dem Interface Dispatcher Layer IDL und den Zellenmolekülen aZM, pZM ist releaseunabhängig, sodass diese beiden Zellenmoleküle aZM, pZM mit unterschiedlichen Releases betrieben werden können.

Wenn gewisse externe Systeme, wie Fahrgastinformationsanzeige (FIA), Funkzentrale, Resourcen-Management an dem Netzwerk NW angebunden werden, ist die Architektur so ausgestaltet, dass sich diese nicht um die Aufteilung auf Netzwerkzellen NWZ kümmern müssen, sodass dies erlaubt, die Aufteilung in Netzwerkzellen NWZ zu verändern, ohne dass dabei das externe System betroffen ist. Weiter muss in die externen Systeme, welche mit nur einer Netzwerkzelle NWZ arbeiten, keine zellenübergreifende Logik eingebaut werden, damit diese mit mehreren Netzwerkzellen NWZ arbeiten können. Das Netzwerk NW umfasst hierzu ja in Form des Aggregators AG bereits die Logik, um Daten aus verschiedenen Netzwerkzellen NWZ zusammenzuführen. Diese Logik wird entsprechend auch für die Anbindung von zellenübergreifenden externen Systemen verwendet.

Weiter stellt das Netzwerk NW zellenübergreifende Schnittstellen zur Verfügung. Die Schnittstellen zu den externen Systeme ist mittels allgemeingültigem Services definiert. Ein Service stellt eine definierte Schnittstelle dar, über welche ein Set von Informationen bidirektional zwischen den externen Systemen und dem Netzwerk NW ausgetauscht wird. Damit wird erreicht, dass derselbe Service von verschiedenen externen Systemen verwendet werden kann. Ein Beispiel ist ein Zugnummer-Service, über welchen alle Zugnummer-Fortschaltungen an interessierte externe Systeme gesendet werden bzw. Zugnummeroperationen von den externen Systemen entgegen genommen werden. Diese Services sind im Netzwerk NW vorgegeben und das externe System muss die vom Netzwerk NW vorgegebene Schnittstelle implementieren. Da dies nicht immer möglich ist, unterstützt das Netzwerk NW auch weiterhin spezifische Schnittstellen für bestimmte externe Systeme, falls eine bereits heute vorhandene Schnittstelle zellenübergreifend funktionieren soll und/oder falls das Netzwerk eine Schnittstelle unterstützen soll, welche von einem externen System vorgegeben ist.

Für beide Fälle werden spezielle Adapter geschrieben, um ein bestimmtes Interface zu implementieren. Der Adapter greift über die Services auf das Netzwerk NW zu. Eine solche Schnittstelle wird, falls das externe System nicht Teil des geschlossenen Netzwerkes NW ist, über einen Proxy Server angeschlossen.

Weiter ist auch die Verwaltung der verschiedenen globalen Daten zu lösen. Hier sind zu nennen:
- Benutzerdaten, Informationsbereiche, Drucker usw... (von jedem Arbeitsplatz AP1 bis AP3 benötigt)
- Informationen, wie Daten aus einzelnen Netzwerkzellen NWZ zusammengehören, wie z.B. Grenzgleisfeldtabelle (betreffen den Arbeitsplatz und die Netzwerkzellen NWZ)
- Definitionen für den Aggregator AG, wie Definition der Übersichtsbilder.

Diese globalen Daten werden nicht einer Netzwerkzelle NWZ zugeordnet, weil diese globalen Daten jedem Arbeitsplatz AP1 bis AP3 und jeder Netzwerkzelle NWZ zur Verfügung stehen müssen und eine Aufteilung erhebliche Schwierigkeit bei der Datenverwaltung liefern würden.Die globalen Daten können in zwei Kategorien unterteilt werden:
- Globale persistente Netzwerk-Daten:
   Daten, welche durch das Netzwerk NW selbst verwaltet werden, dass heisst die Netzwerk-Software erzeugt, ändert und löscht diese Daten selbst.
- Globale Konfigurationsdaten
   Diese Daten enthalten globale Konfigurationsinformationen und werden von der Netzwerk-Software nur gelesen.

Dabei sei an dieser Stelle noch einmal explizit darauf hingewiesen, dass die Netzwerk-Software nicht mit der Netzwerkzellen-Software verwechselt werden darf. Für die globalen persistenten Daten werden bei Änderungen alte Stände gespeichert, wodurch bei einer Fehlmanipulation eines Administrators das Zurückgehen auf einen alten Stand möglich ist. Die globalen Konfigurationsdaten können offline erstellt werden und dann in die globalen Daten eingespielt werden. Um eine weiche Migration sowie den unterbruchfreien Update zu ermöglichen, sind daher verschiedene Stände der globalen Konfigurationsdaten verfügbar, welche zu unterschiedlichen Zellenkonfigurationen, d.h. zu unterschiedlichen Versionen der Zellen-Software inkl. der hierzu erforderlichen Daten passen.

Das vorstehend bespielhaft für ein netzweites Eisenbahnleitsystem beschriebene Netzwerk NW bzw. dessen Architektur und das erfindungsgemässe Verfahren zum unterbrechungsfreien Update der Logik von einzelnen Netzwerkzellen lassen sich ebenso in den Bereichen der Telekommunikation, Netzleittechnik in der Energieverteilung und im Strassen- und Luftverkehr sowie allen komplexeren Prozessen zur Steuerung des Gesamtprozesses einsetzen.

## Patentansprüche

1. Verfahren zum unterbrechungsfreien Software-Update für eine Netzwerkzelle (NWZ), insbesondere eine Leittechnikzelle, eines in eine Anzahl von Bereichen unterteilten Netzwerks (NW), insbesondere eines in regionale Bereiche unterteilten Leitsystems für ein Eisenbahnnetzwerk, bei dem
a) auf der Netzwerkzelle (NWZ) mindestens zwei Zellenmoleküle (aZM, pZM) ausgestaltet sind, auf denen eine dieser Netzwerkzelle (NWZ) zugeordnete bereichsspezifische Zellen-Software ausführbar ist, wobei im Normalbetrieb eines dieser mindestens zwei Zellenmoleküle (aZM) die Zellen-Software operativ aktiv ausführt,
b) bei Vorhandensein eines Software-Updates für die Zellen-Software das Update auf dem nicht-operativen Zellenmolekül (pZM) installiert und ausgeführt wird,
c) das Update der Zellen-Software an einem dem Zellenmolekül temporär zum Testzweck zuordenbaren Arbeitsplatz (P) geprüft wird, und
d) nach Bestehen des Tests auf das Zellenmolekül (pZM) mit der upgedateten Zellensoftware umgeschaltet und die upgedatete Zellensoftware nun auf diesem Zellenmolekül (pZM) operativ aktiv für die Netzwerkzelle (NWZ) ausgeführt wird.

2. Verfahren nach Anspruch 1,
**dadurch gekennzeichnet, dass**
das operativ aktive Zellenmolekül (aZM) prozessrelevante Daten von Umsystemen (STW A bis STW n, UA1 bis Un2) erhält und/oder an Umsysteme (STW A bis STW n, UA1 bis Un2) ausgibt, wobei das nicht-operative Zellenmolekül (pzM), auf welchem das Software-Update installiert und ausgeführt wird, diesselben und/oder die zu seinem Betrieb spezifisch erforderlichen prozessrelevanten Daten erhält und eigene mit der upgedateten Zellen-Software ermittelte Daten an die Umsysteme (STW A bis STW n, UA1 bis Un2) abgibt.

3. Verfahren nach Anspruch 1 oder 2,
**dadurch gekennzeichnet, dass**
das operativ aktive Zellenmolekül (aZM) und das nicht-operativ aktive Zellenmolekül (pZM) auf Konfigurations-und/oder Prozessdaten zugreifen und/oder Protokolleinträge in einer Datenbank vornehmen, wobei die Zellensoftware sowie das Software-Update für die Zellensoftware so ausgestaltet sind, dass das Zugreifen auf die Konfigurations- und/oder Prozessdaten und/oder die Vornahme der Protokolleinträge releaseunabhängig sind.

4. Verfahren nach einem der Ansprüche 1 bis 3,
**dadurch gekennzeichnet, dass**
zwischen den mindestens zwei Zellenmolekülen (aZM, pZM) und den Umsystemen (STW A bis STW n, UA1 bis Un2) mindestens ein Schnittstellenmolekül (SM) eingefügt wird, welches hinsichtlich einer Datenzuordnung von den Umsystemen (STW A bis STW n, UA1 bis Un2) an die Zellenmoleküle (aZM, pZM) und/oder von den Zellenmolekülen (aZM, pZM) an die Umsysteme (STW A bis STW n, UA1 bis Un2) konfiguriert wird und so die Daten zwischen den Zellenmolekülen (aZM, pZM) und den Umsystemen (STW A bis STW n, UA1 bis Un2) gemäss der Konfiguration verteilt.

5. Verfahren nach Anspruch 4,
**dadurch gekennzeichnet, dass**
das Schnittstellenmolekül (SM) während des parallelen Betriebs von dem operativ aktiven Zellenmolekül (aZM) und dem nicht-operativ aktiven Zellenmolekül (pZM), welches mit der upgedateten Zellen-Software betrieben wird, in einer Weise konfiguriert wird, dass auch von dem nicht-operativ aktiven Zellenmolekül (pZM) Daten an Umsysteme (STW A bis STW n, UA1 bis Un2) ausgegeben werden.

6. Verfahren nach einem der Ansprüche 1 bis 5,
**dadurch gekennzeichnet, dass**
zu dem Zeitpunkt, zu dem ein mit dem Software-Update aufgerüstetes Zellenmolekül (pZM) gestartet wird, ein komplettes Abbild der von dem operativ aktiven Zellenmolekül (aZM) genutzten Daten an das dann nicht-operativ aktive Zellenmolekül (pZM) transferiert wird.

7. Verfahren nach einem der Ansprüche 1 bis 6,
**dadurch gekennzeichnet, dass**
während des Betriebs des nicht-operativ aktiven Zellenmoleküls (pZM) Bearbeitungsausnahmen konfiguriert und aktiv geschaltet werden, so dass von den Bearbeitungsausnahmen betroffene Funktionen im operativ aktiven Zellenmolekül (aZM) in den nicht-operativ aktiven Zustand wechseln.

8. Verfahren nach Anspruch 7,
**dadurch gekennzeichnet, dass**
mit dem Umschalten auf das mit dem Software-Update ausgerüstete Zellenmolekül (pZM), das damit operativ aktiv für die Netzwerkzelle (NWZ) arbeitet, sämtliche zuvor konfigurierte Bearbeitungsausnahmen aufgehoben werden.

9. Verfahren nach einem der Ansprüche 1 bis 8,
**dadurch gekennzeichnet, dass**
dem Netzwerk (NW) eine Anzahl von Bedienerarbeitsplätzen (AP1 bis AP3) zugeordnet wird, die jeweils individuell mit nur einem der mindestens zwei Zellenmoleküle (aZM, pZM) zusammen arbeiten.

10. Verfahren nach einem der Ansprüche 1 bis 9,
**dadurch gekennzeichnet, dass**
unterschiedliche Stände von globalen Konfigurationsdaten gehalten werden, wobei jeder Version der Zellen-Software ein Stand der globalen Konfigurationsdaten zugeordnet wird.

11. Verfahren nach Anspruch 10,
**dadurch gekennzeichnet, dass**
mit der Installation eines Software-Updates die Konfigurationsdaten angepasst werden, wobei diese Anpassung in einem neuen Stand der globalen Konfigurationsdaten mündet.

12. Verfahren nach einem der Ansprüche 1 bis 11,
**dadurch gekennzeichnet, dass**
nach dem Umschalten auf das mit dem Update der Zellen-Software ausgerüstete Zellenmolekül (pZM) das vormals operativ aktive Zellenmolekül (aZM) die auf ihm laufende nicht-geupdatete Zellen-Software weiterhin in dem nicht-operativ aktiven Zustand ausführt.
